# EUROPÄISCHE PATENTANMELDUNG

(11) **EP 4 400 284 A1**
(43) Veröffentlichungstag der Anmeldung: **17.07.2024**
(21) Anmeldenummer: 23151349.0
(22) Anmeldetag: 12.01.2023
(51) Int. Cl.: B29C 45/00, B29C 45/37, B65D 65/46

(54) **VERFAHREN ZUR HERSTELLUNG EINES KOMPOSTIERBAREN SPRITZGUSSTEILS**

(71) Anmelder: Rezemo GmbH, 70794 Filderstadt (DE)
(72) Erfinder: REITZE, Julian, 70794 Filderstadt (DE); JAROTHE, Janina, 70794 Filderstadt (DE)
(74) Vertreter: BRP Renaud & Partner mbB Rechtsanwälte Patentanwälte Steuerberater

(57) **Zusammenfassung**

Die vorliegende Erfindung betrifft ein Verfahren zur Herstellung eines kompostierbaren Spritzgussteils (1) aus einem zumindest Biopolymere aufweisenden Werkstoff.

Eine verbesserte Umweltbilanz bei vereinfachter Herstellung werden dadurch erreicht, das eine Außenfläche (2) des Spritzgussteils (1) in zumindest einem Spritzgussteilabschnitt (3) mit einer die Oberfläche vergrößernden Spritzgussteilstrukturierung (4) versehen wird.

Die Erfindung betrifft des Weiteren die Verwendung eines Spritzgusswerkzeugs (13) zur Herstellung eines solchen Spritzgussteils (1), ein als Verpackungsteil (18), insbesondere als Verschluss (5), hergestelltes solches Spritzgussteil (1) sowie einen Behälter (20) mit einem solchen Verschluss (5).

## Beschreibung

Die vorliegende Erfindung betrifft ein Verfahren zur Herstellung eines kompostierbaren Spritzgussteils aus einem thermoplastischen Werkstoff. Die Erfindung betrifft des Weiteren die Verwendung eines Spritzgusswerkzeugs zum Spritzgießen eines solchen Spritzgussteils. Darüber hinaus betrifft die Erfindung ein solches, als Verpackungsteil ausgebildetes Spritzgussteil sowie einen Behälter mit einem solchen Verpackungsteil.

Der Einsatz von Kunststoff in unterschiedlichen Anwendungen ist hinlänglich bekannt. Derartige Kunststoffe sind üblicherweise nicht oder lediglich mit erhöhtem Aufwand abbaubar, sodass sie eine nachteilige Umweltbilanz besitzen. Wünschenswert ist es daher, aus Kunststoff hergestellte Teile durch solche zu ersetzen, die eine verbesserte Umweltbilanz aufweisen.

Die vorliegende Erfindung beschäftigt sich mit der Aufgabe, für ein Verfahren zum Herstellen eines kompostierbaren Teils, für die Verwendung eines Spritzgusswerkzeugs zur Herstellung eines solchen Teils sowie für ein solches, als Verpackungsteil ausgebildetes Teil und für einen Behälter mit einem solchen Verpackungsteil verbesserte oder zumindest andere Ausführungsformen anzugeben. Insbesondere beschäftigt sich die vorliegende Erfindung mit der Aufgabe, für das Verfahren, für die Verwendung, für das Verpackungsteil sowie für den Behälter verbesserte oder zumindest alternative Ausführungsformen anzugeben, welche sich durch eine verbesserte Umweltbilanz auszeichnen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein kompostierbares Teil mittels Spritzguss aus einem Werkstoff mit Biopolymeren herzustellen und eine Außenfläche des Teils zumindest abschnittsweise mit einer die Oberfläche vergrößernden Struktur zu versehen. Die Herstellung des Teils mittels Spritzguss führt zu einer einfachen und kostengünstigen Bereitstellung des Teils, nachfolgend auch als Spritzgussteil bezeichnet. Der Einsatz des Werkstoffs mit Biopolymeren in Kombination mit der Vergrößerung der Oberfläche des Spritzgussteils mittels der Struktur führen zu einem beschleunigten und somit verbesserten mechanischen Zerfall des Spritzgussteils, also zu einer beschleunigten und somit verbesserten Desintegration. Die erhöhte Desintegration führt dazu, dass das Spritzgussteil verbessert kompostierbar ist, also eine erhöhte Güte der Kompostierung aufweist. In der Folge weist das Spritzgussteil eine verbesserte Umweltbilanz bei zugleich einfacher Herstellung auf.

Dem Erfindungsgedanken entsprechend wird beim Verfahren ein solches, kompostierbares Spritzgussteil aus einem zumindest Biopolymere aufweisenden, thermoplastischen Werkstoff mittels Spritzguss hergestellt. Dabei wird das Spritzgussteil aus dem Werkstoff spritzgegossen und eine Außenfläche des Spritzgussteils in zumindest einem Abschnitt mit einer Strukturierung versehen, derart, dass die Strukturierung im zugehörigen Abschnitt eine Oberfläche des Spritzgussteils vergrößert. Der Abschnitt wird nachfolgend auch als Spritzgussteilabschnitt und die Strukturierung als Spritzgussteilstrukturierung bezeichnet.

Unter "Kompostierung" ist vorliegend insbesondere die Umwandlung des Werkstoffs und somit des Spritzgussteils in Kohlenstoffoxid, Wasser und Biomasse zu verstehen.

Die Bewertung und somit Güte der Kompostierung ist, beispielsweise gemäß den Normen "EN 13432", "ASTM D6400", "ASTM D6868", "AS 4736" "ISO 17088" und "ISO 18606", von der Desintegration des Spritzgussteils abhängig. Dabei führt eine erhöhte Desintegration zu einer erhöhten Güte und somit zu einer vereinfachten Kompostierung des Spritzgussteils. Mit der Vergrößerung der Oberfläche in zumindest einem Spritzgussteilabschnitt mittels der Spritzgussteilstrukturierung erfolgt also, wie erläutert, aufgrund eines vereinfachten mechanischen Zerfalls eine erhöhte Desintegration und folglich eine leichtere Kompostierung. Dies führt zur beschriebenen verbesserten Umweltbilanz.

Als Biopolymere sind vorliegend sowohl biobasierte Polymere als auch bioabbaubare Polymere zu verstehen.

Der zumindest Biopolymere aufweisende Werkstoff kann aus Biopolymeren bestehen oder neben Biopolymeren auch andere Bestandteile, beispielsweise Additive und dergleichen, umfassen.

Der Werkstoff kann prinzipiell ein beliebiger sein, sofern er thermoplastisch ist und zumindest Biopolymere aufweist.

Als bevorzugt gelten Ausführungsformen, bei denen der Werkstoff mit einem Biokunststoff compoundiertes Material mit Fasern natürlichen Ursprungs, nachfolgend auch als Naturmaterial bezeichnet, aufweist. Das Naturmaterial besteht vorzugsweise zumindest im Wesentlichen aus Fasern natürlichen Ursprungs. Insbesondere besteht der Werkstoff im Wesentlichen aus mit einem Biokunststoff compoundiertem Naturmaterial. Das heißt, dass das Spritzgussteil aus einem mit einem Biokunststoff compoundiertem Naturmaterial aufweisenden Werkstoff, insbesondere aus einem im Wesentlichen aus mit einem Biokunststoff compoundiertem Naturmaterial bestehenden Werkstoff, spritzgegossen wird. Das Naturmaterial saugt zur Kompostierung Feuchtigkeit an und insbesondere in das Spritzgussteil. Die somit eingesaugte Feuchtigkeit führt zum einen zu einem weiter beschleunigten mechanischen Zerfall des Spritzgussteils. Zum anderen werden auf diese Weise Enzyme und/oder Mikroorganismen mit der Flüssigkeit in das Spritzgussteil eingebracht, welche den Zerfall des Spritzgussteils beschleunigen und somit wiederum zu einer beschleunigten Kompostierung führen. Die Spritzgussteilstrukturierung führt dazu, dass die Anzahl und/oder Dichte der vorhandenen Fasern des Naturmaterials im Spritzgussteilabschnitt erhöht ist, sodass besagte Vorgänge wiederum verstärkt und beschleunigt werden. Der Werkstoff aus oder zumindest mit dem mit Biokunststoff compoundiertem Naturmaterial führt also mittels der vergrößerten Oberfläche in dem zumindest einen Spritzgussteilabschnitt in synergistischer Weise zu einer verbesserten und beschleunigten Kompostierung und somit zu einer verbesserten Umweltbilanz.

Biokunststoff im Sinne der vorliegenden Erfindung ist ein kompostierbarer Kunststoff.

Unter "Fasern natürlichen Ursprungs" oder "Naturfasern" sind vorliegend Fasern natürlichen Ursprungs aus nachwachsenden Rostoffen und Fasern pflanzlichen Ursprungs zu verstehen. Beispiele für das Naturmaterial sind Holz im weiteren Sinne, also insbesondere Lignocellulose; Weichholz, wie Fichte, Tanne, Kiefer; Gräser; Getreide inklusive Samenschalen; Sonnenblume inklusive Samenschalen; Bambus; Hanf; Jute; Sisal; Kokos; Abaca; Baumwolle; Cellulose; fibrillierte Cellulose.

"Compoundieren" bedeutet vorliegend eine Aufbereitung des Biokunststoffs durch Beimischung des Naturmaterials. Vorteilhaft erfolgt dabei eine gleichmäßige Vermischung des Biokunststoffs mit dem Naturmaterial. Bevorzugt erfolgt das Compoundieren durch das Extrudieren des Biokunststoffs mit dem Naturmaterial, beispielsweise in einem Extruder. Das Spritzgussteil kann also mittels Beimischung des Naturmaterials im Biokunststoff, insbesondere durch das Extrudieren des Biokunststoffs mit dem Naturmaterial, hergestellt sein.

Bei bevorzugten Ausführungsformen entspricht das Naturmaterial einem Holzmaterial. Das Spritzgussteil wird also vorzugsweise aus einem mit einem Biokunststoff compoundiertem Holzmaterial aufweisenden Werkstoff spritzgegossen. Insbesondere besteht der Werkstoff im Wesentlichen aus mit Biokunststoff compoundiertem Holzmaterial. Das heißt, dass das Spritzgussteil aus einem mit Biokunststoff compoundiertem Holzmaterial aufweisenden Werkstoff, insbesondere aus einem im Wesentlichen aus mit Biokunststoff compoundiertem Holzmaterial bestehenden Werkstoff, spritzgegossen wird. Dies führt neben der beschriebenen, verbesserten und beschleunigten Kompostierung und somit der verbesserten Umweltbilanz aufgrund der Verfügbarkeit des Holzmaterials zu einer kostengünstigen Herstellung. Das Holzmaterial kann dabei aus Produktionsabfällen stammen, sodass die Umweltbilanz zusätzlich verbessert wird.

Die Spritzgussteilstrukturierung besteht zweckmäßig aus im zugehörigen Spritzgussteilabschnitt eingebrachten Vertiefungen. Dabei ist der jeweilige zumindest eine Spritzgussteilabschnitt komplett mit der Spritzgussteilstrukturierung versehen, weist also über die gesamte Fläche des Spritzgussteilabschnitt solche Vertiefungen auf.

Bevorzugt folgen die Vertiefungen der Spritzgussteilstrukturierung unmittelbar aufeinander.

Vorstellbar ist es, dass zumindest zwei Vertiefungen der Spritzgussteilstrukturierung sich quer zur Normalen des zugehörigen Spritzgussteilabschnitts länglich erstrecken.

Eine vorteilhafte Vergrößerung der Oberfläche zur Erhöhung der Desintegration bei zugleich vereinfachter Herstellung ergebt sich bei bevorzugten Ausführungsformen dadurch, dass die Spritzgussteilstrukturierung in zumindest einem der wenigstens einen Spritzgussteilabschnitte, vorteilhaft im jeweiligen Spritzgussteilabschnitt, mit Vertiefungen herstellt wird, welche eine Tiefe von zumindest 10 µm aufweisen. Die Tiefe verläuft dabei entlang der Normalen des zugehörigen Spritzgussabschnitts. Bevorzugt wird die Spritzgussteilstrukturierung in zumindest einem der wenigstens einen Spritzgussteilabschnitte, vorteilhaft im jeweiligen Spritzgussteilabschnitt, mit Vertiefungen herstellt, welche Tiefen zwischen 10 µm und 100 µm, beispielsweise zwischen 50 µm und 65 µm, aufweisen.

Als vorteilhaft gelten Ausführungsformen, bei welchen die Spritzgussteilstrukturierung in zumindest einem der wenigstens einen Spritzgussteilabschnitte, vorteilhaft im jeweiligen Spritzgussteilabschnitt, mit Vertiefungen herstellt wird, derart, dass der Spritzgussteilabschnitt zwischen 0,010 und 0,50 Vertiefungen pro Quadratmillimeter aufweist. Dies führt zu einer vorteilhaften Vergrößerung der Oberfläche, derart, dass die Desintegration bei vereinfachter Herstellung erhöht ist. In der Folge ist die Umweltbilanz des Spritzgussteils bei zugleich vereinfachter Herstellung verbessert.

In zumindest einem der wenigstens einen Spritzgussteilabschnitte, vorteilhaft im jeweiligen Spritzgussteilabschnitt, wird die Spritzgussteilstrukturierung bevorzugt derart hergestellt, dass die Vertiefungen eine Länge zwischen 70 mm und 100 mm, beispielsweise von 84 mm, aufweisen. Die Länge verläuft hierbei entlang des zugehörigen Spritzgussteilabschnitts. Derartige Längen der Vertiefungen führen zu einer effektiven Vergrößerung der Oberfläche des zugehörigen Spritzgussteilabschnitts und sind zugleich einfach herstellbar. Folglich kommt es bei einer vereinfachten Herstellung zu einer verbesserten Umweltbilanz des Spritzgussteils.

Die Vertiefungen können beliebige Querschnitte, beispielsweise einen rechteckigen Querschnitt, einen V-förmigen Querschnitt oder einen runden Querschnitt aufweisen.

Prinzipiell können die Vertiefungen eines Spritzgussteilabschnitts identisch sein.

Es versteht sich, dass die Vertiefungen zumindest eines der wenigstens einen Spritzgussteilabschnitte unterschiedlich sein können. Beispielsweise kann ein Spritzgussteilabschnitt Vertiefungen mit unterschiedlichen Querschnitten und/oder mit unterschiedlichen Verläufen und/oder mit unterschiedlichen Formen und/oder mit unterschiedlichen Längen und/oder mit unterschiedlichen Tiefen aufweisen.

Es versteht sich auch, dass zumindest zwei Vertiefungen zumindest eines der wenigstens einen Spritzgussteilabschnitte sich kreuzen und/oder ineinander übergehen können.

Das Spritzgussteil kann mit einem einzigen, solchen Spritzgussteilabschnitt versehen werden. Das heißt, dass das Spritzgussteil außerhalb des Spritzgussteilabschnitts frei von solchen Spritzgussteilstrukturierungen sein kann.

Das Spritzgussteil kann mit zwei oder mehreren solchen Spritzgussteilabschnitten versehen werden. Die Spritzgussteilabschnitte sind also zueinander beabstandet, wobei Abschnitte zwischen den Spritzgussteilabschnitten frei von einer solchen Spritzgussteilstrukturierung sind.

Es versteht sich dabei, dass verschiedene Spritzgussteilabschnitte unterschiedliche Spritzgussteilstrukturierungen aufweisen können. Das heißt, dass die Spritzgussteilstrukturierungen der verschiedenen Spritzgussteilabschnitte sich voneinander unterscheiden können.

Der jeweilige Spritzgussteilabschnitt kann prinzipiell auf beliebige Weise mit der zugehörigen Spritzgussteilstrukturierung versehen werden.

Bevorzugt erfolgt das Versehen zumindest einer der wenigstens einen Spritzgussteilabschnitte, vorzugsweise des jeweiligen Spritzgussteilabschnitt, mit der zugehörigen Spritzgussteilstrukturierung beim Spritzgießen. Dies führt zu einer besonders einfachen und präzisen Herstellung des Spritzgussbauteils sowie der Spritzgussteilstrukturierung.

Vorteilhaft weist ein zugehöriges Spritzgusswerkzeug zu diesem Zweck eine entsprechende Strukturierung auf, welche nachfolgend auch als Werkzeugstrukturierung bezeichnet wird. Die Werkzeugstrukturierung entspricht dabei dem "Negativen" der Spritzgussteilstrukturierung. Das heißt, dass ein Spritzgusswerkzeug zum Spritzgießen des Spritzgussteils bereitgestellt wird, sodass mit einer Innenfläche des Spritzgusswerkzeugs die Außenfläche des Spritzgussteils zumindest bereichsweise hergestellt wird. Dabei wird zumindest ein Abschnitt der Innenfläche mit der Werkzeugstrukturierung versehen, welcher Abschnitt nachfolgend auch als Werkzeugabschnitt bezeichnet wird. Der jeweilige Werkzeugabschnitt ist einem Spritzgussteilabschnitt zugeordnet, derart, dass die jeweilige Werkzeugstrukturierung beim Spritzgießen eine zugehörige solche Spritzgussteilstrukturierung herstellt.

Das Spritzgussteil wird also vorteilhaft unter Verwendung des Spritzgusswerkzeugs hergestellt. Es versteht sich dabei, dass die Verwendung des Spritzgusswerkzeugs als solches ebenfalls zum Umfang dieser Erfindung gehört.

Der jeweilige Werkzeugabschnitt ist, analog zum jeweiligen Spritzgussteilabschnitt, zweckmäßig gänzlich mit einer zugehörigen solchen Werkzeugstrukturierung versehen.

Das Versehen des jeweiligen Werkzeugabschnitts mit der zugehörigen Werkzeugstrukturierung kann auf beliebige Weise erfolgen.

Beispielsweise kann eine solche Werkzeugstrukturierung mittels Schleifens, Fräsens, Polierens, Ätzens oder Lasergravierens des zugehörigen Werkzeugabschnitts hergestellt werden.

Bevorzugt ist zumindest einer der wenigstens einen Werkzeugabschnitte, vorzugsweise der jeweilige Werkzeugabschnitt, mit einem die Werkzeugstrukturierung aufweisenden Einsatzes versehen, sodass der Einsatz die Werkzeugstrukturierung enthält. Somit kann die Außenfläche des Spritzgussteils durch einen Wechsel und/oder durch eine Verschiebung des zumindest einen Einsatzes auf einfache und präzise Weise mit unterschiedlichen Spritzgussteilstrukturierungen versehen werden. Das heißt, dass auf diese Weise die Herstellung des Spritzgussteils auf einfache Weise flexibel gestaltet werden kann.

Das Versehen der Außenfläche zumindest in einem Spritzgussteilabschnitt mit einer Spritzgussteilstrukturierung bedeutet, dass die gesamte Außenfläche mit zumindest einer Spritzgussteilstrukturierung versehen sein kann.

Die Außenfläche des Spritzgussteils weist eine Unterseite, eine von der Unterseite abgewandte Oberseite und vorzugsweise zumindest eine die Unterseite mit der Oberseite verbindende Außenseite auf.

Denkbar ist es, dass zumindest eine Seite der Außenfläche einem solchen Spritzgussteilabschnitt entspricht, also gänzlich mit einer solchen Spritzgussteilstrukturierung versehen ist.

Bevorzugt ist zumindest die Oberseite mit zumindest einer solchen Spritzgussteilstrukturierung versehen. Dabei kann die Oberseite einem solchen Spritzgussteilabschnitt entsprechen.

Insbesondere ist es vorstellbar, ausschließlich die Oberseite mit zumindest einer solchen Spritzgussteilstrukturierung zu versehen.

Das Spritzgussteil kann prinzipiell ein beliebiges Teil sein.

Insbesondere ist das Spritzgussteil ein solches, das zum Verpacken zum Einsatz kommt, also ein Verpackungsteil. Da solche Spritzgussteile üblicherweise für einen kürzeren Gebrauch vorgesehen sind, kommt diesen die verbesserte Umweltbilanz besonders zugute.

Unter Verspackungsteil sind vorliegend solche Teile zu verstehen, die zum zumindest teilweisen Umhüllen oder zum Verschließen eines Gegenstands zum Einsatz kommen. Das Verpackungsteil kann also eine Verpackung oder ein Verschluss sein.

Bei vorteilhaften Ausführungsformen ist das Spritzgussteil bzw. das Verpackungsteil ein Verschluss zum Verschließen eines Aufnahmevolumens eines Behälters. Das heißt, dass als Spritzgussteil ein Verschluss zum Verschließen des Aufnahmevolumens des Behälters hergestellt wird. Das Aufnahmevolumen kann dem Aufnehmen bzw. Aufbewahren einer Ware, beispielsweise von Lebensmitteln oder Kosmetik, dienen.

Das Verschließen kann beispielsweise durch Einlegen, Schrauben, Stecken und dergleichen erfolgen.

Vorteilhaft dient der Verschluss dem lösbaren, wiederholbaren Verschließen des Aufnahmevolumens.

Bei vorteilhaften Varianten ist das Spritzgussteil bzw. das Verschlussteil eine Verpackung zur zumindest teilweisen Umhüllung eines Gegenstands. Der Gegenstand kann wiederum eine Ware, beispielsweise Lebensmittel und/oder Kosmetik, aufnehmen/aufbewahren oder eine solche Ware sein. Die Verpackung kann also insbesondere ein Behälter sein.

Bevorzugt sind Ausführungsformen, bei welchen die Oberseite des Verschlusses mit zumindest einer solchen Spritzgussteilstrukturierung versehen ist, bevorzugt einem solchen Spritzgussteilabschnitt entspricht, und im Gebrauch vom Aufnahmevolumen abgewandt ist. Das heißt, dass als Oberseite diejenige Seite hergestellt wird, welche im Gebrauch vom Aufnahmevolumen abgewandt ist. Insbesondere kann ausschließlich die Oberseite mit zumindest einer solchen Spritzgussteilstrukturierung versehen sein, beispielsweise einem solchen Spritzgussteilabschnitt entsprechen. Somit ist die Oberseite im Gebrauch vom Aufnahmevolumen und folglich von der im Aufnahmevolumen aufgenommenen Ware, das heißt insbesondere von der Kosmetik und/oder vom Lebensmittel, abgewandt. Dies hat zur Folge, dass es zu keiner oder zumindest einer reduzierten Wechselwirkung der im Aufnahmevolumen befindlichen Ware mit der Oberseite kommt und/oder ein Belegen der Oberseite mit der Ware verhindert oder zumindest reduziert ist. Das reduzierte Belegen mit der Ware hat insbesondere zur Folge, dass ein Versiegeln der Oberseite und somit der Spritzgussteilstrukturierung mit der Ware verhindert oder zumindest reduziert ist. Da eine solche Versiegelung zu einer verlangsamten Kompostierung führen würde, führt das Versehen der Oberseite mit der Spritzgussteilstrukturierung zu einer verbesserten Güte der Kompostierung somit zu einer verbesserten Umweltbilanz. Wird ausschließlich die Oberseite mit der zumindest einen Spritzgussteilstrukturierung versehen, ist also die Unterseite frei von solchen Spritzgussteilstrukturierung in, bleibt die Unterseite glatter. Die glattere Ausführung der Unterseite führt zu einer entsprechend reduzierten Oberfläche an der Unterseite, sodass Wechselwirkungen mit der Ware wiederum reduziert sind. Dies ist insbesondere dann von Vorteil, wenn eine Wechselwirkung der Ware mit dem Verschluss, beispielsweise aufgrund von möglichen chemischen Reaktionen, unerwünscht oder möglichst zu reduzieren ist.

Ist das Verpackungsteil eine Verpackung, ist es wiederrum die vom umhüllten Gegenstand abgewandt Oberseite mit zumindest einer solchen Spritzgussteilstrukturierung versehen, entspricht beispielsweise einem solchen Spritzgussteilabschnitt. Vorstellbar ist es insbesondere, ausschließlich die Oberseite mit zumindest einer solchen Spritzgussteilstrukturierung zu versehen. Somit kommt es zu keiner oder zumindest einer reduzierten Wechselwirkung der Oberseite mit dem verpackten Gegenstand und/oder gegebenenfalls darin aufgenommener Ware. Insbesondere wird auf diese Weise ein Belag der Oberseite mit der Ware vermieden oder zumindest reduziert. Analog zum Fall eines Verschlusses als Verpackungsteil wird somit ein Versiegeln der Oberseite und somit der Spritzgussteilstrukturierung mit der Ware verhindert oder zumindest reduziert. Da eine solche Versiegelung zu einer verlangsamten Kompostierung führen würde, führt das Versehen der Oberseite mit der Spritzgussteilstrukturierung zu einer verbesserten Güte der Kompostierung somit zu einer verbesserten Umweltbilanz. Wird ausschließlich die Oberseite mit der zumindest einen Spritzgussteilstrukturierung versehen, ist also die Unterseite frei von solchen Spritzgussteilstrukturierung in, bleibt die Unterseite glatter. Die glattere Ausführung der Unterseite führt zu einer entsprechend reduzierten Oberfläche an der Unterseite, sodass Wechselwirkungen mit dem Gegenstand und/oder der Ware wiederum reduziert sind. Dies ist insbesondere dann von Vorteil, wenn eine Wechselwirkung des Gegenstands und/oder der Ware mit dem Verschluss, beispielsweise aufgrund von möglichen chemischen Reaktionen, unerwünscht oder möglichst zu reduzieren ist. Glattere Ausbildung der dem Gegenstand bzw. der Ware zugewandten Unterseite erlaubt es ferner den Gegenstand und/oder die Ware vereinfacht aus der Verpackung zu entnehmen. Insbesondere lässt sich die der Gegenstand und/oder die Ware auf diese Weise mit reduzierten mechanischen Aufwand, insbesondere mit reduzierten mechanischen Widerstand, mittels eines Werkzeugs, beispielsweise eines Würfels und dergleichen, aus der Verpackung entnehmen.

Es versteht sich, dass das Verpackungsteil, insbesondere der Verschluss, als solches ebenso zum Umfang dieser Erfindung gehört wie der Behälter mit dem Verschluss.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: einen vereinfachten, seitlichen Schnitt eines Spritzgussteils an einem Behälter,
- Fig. 2: eine Seitenansicht des Spritzgussteils,
- Fig. 3: eine Draufsicht auf einer Oberseite des Spritzgussteils,
- Fig. 4: einen Schnitt durch das Spritzgussteil im Bereich der Oberseite,
- Fig. 5: einen Schnitt durch ein Spritzgusswerkzeug zum Spritzgießen des Spritzgussteils,
- Fig. 6: einen vereinfachten seitlichen Schnitt durch das Spritzgussteil bei einem anderen Ausführungsbeispiel.

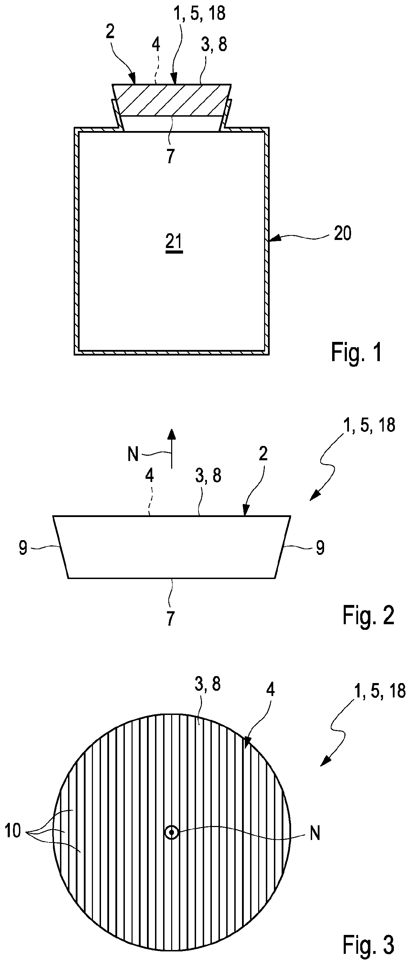

Ein Spritzgussteil 1, wie es beispielhaft in den Figuren 1 bis 4 sowie 6 gezeigt ist, wird aus einem zumindest Biopolymere aufweisenden, thermoplastischen Werkstoff mittels Spritzguss hergestellt. Der Werkstoff ist kompostierbar, sodass auch das Spritzgussteil 1 kompostierbar ist. Dabei wird das Spritzgussteil 1 aus dem Werkstoff spritzgegossen und eine Außenfläche 2 des Spritzgussteils 1 in zumindest einem Abschnitt 3 mit einer Strukturierung 4 versehen, derart, dass die Strukturierung 4 im zugehörigen Abschnitt 3 eine Oberfläche des Spritzgussteils 1 vergrößert. Der Abschnitt 3 wird nachfolgend auch als Spritzgussteilabschnitt 3 und die Strukturierung 4 auch als Spritzgussteilstrukturierung 4 bezeichnet.

Die Vergrößerung der Oberfläche im jeweiligen zumindest einen Spritzgussteilabschnitt 3 führt zu einer erhöhten Desintegration des Spritzgussteils 1 und in der Folge zu einer erhöhten Güte der Kompostierung des Spritzgussteils 1. Somit ist eine verbesserte Umweltbilanz des Spritzgussteils 1 bei vereinfachter Herstellung realisiert.

Wie vorstehend beschrieben, weist der Werkstoff zumindest Biopolymere auf. Das heißt, dass der Werkstoff aus Biopolymere besteht, oder neben Biopolymeren weitere Bestandteile, wie Additive und dergleichen, umfassen kann. Bei dem Biopolymeren kann es sich um biobasierte und/oder bioabbaubare Polymere handeln. In den gezeigten Ausführungsbeispielen wird als Werkstoff ein solcher verwendet, der mit einem Biokunststoff compoundiertes Naturmaterial aufweist und insbesondere im Wesentlichen daraus besteht. Das Naturmaterial weist Fasern natürlichen Ursprungs auf, besteht insbesondere im Wesentlichen aus solchen Fasern. Vorteilhaft handelt es sich beim Naturmaterial um Holzmaterial. Als Werkstoff wird also vorteilhaft ein solcher verwendet, der mit einem Biokunststoff compoundiertes Holzmaterial aufweist und insbesondere im Wesentlichen daraus besteht. Das Naturmaterial, insbesondere die Fasern des Naturmaterials, führen dazu, das Feuchtigkeit beschleunigt in das Spritzgussteil 1 eindringt und somit wiederum zu einer vereinfachten und beschleunigten Kompostierung führt.

Bei der Kompostierung erfolgt eine Umwandlung des Werkstoffs und somit des Spritzgussteils 1 in Kohlenstoffdioxid, Wasser und Biomasse.

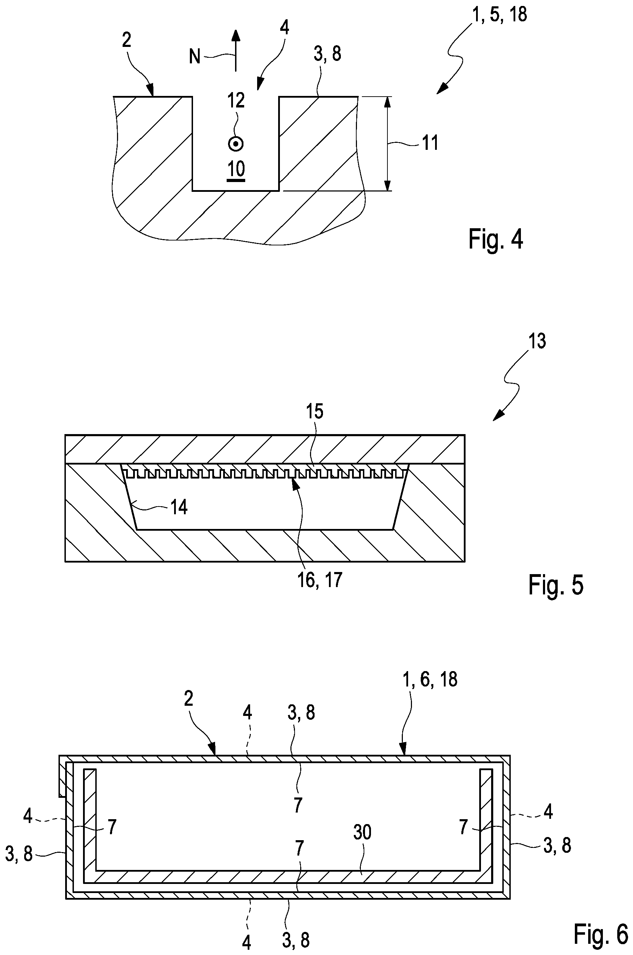

Als Spritzgussbauteil 1 kann, gemäß dem Ausführungsbeispiel der Figuren 1 bis 4 ein Verpackungsteil 18 hergestellt werden (siehe insbesondere Figuren 1 und 6). Beim Verpackungsteil 18 kann es sich um einen in den Figuren 1 bis 3 beispielhaft gezeigten Verschluss 5 für einen in Figur 1 beispielhaft gezeigten Behälter 20 handeln, , das Spritzgussbauteil 1 also ein solcher Verschluss 5 sein. Das Verpackungsteil 18 kann, gemäß dem Ausführungsbeispiel der Figur 6 eine Verpackung 6 zum zumindest teilweisen Umhüllen eines Gegenstands 30 handeln, das Spritzgussbauteil 1 also eine solche Verpackung 6 sein.

Die Außenfläche 2 des Spritzgussbauteils 1 weist, wie beispielsweise Figur 2 entnommen werden kann, eine Unterseite 7, eine von der Unterseite 7 abgewandte Oberseite 8 und zumindest eine die Unterseite 7 mit der Oberseite 8 verbindende Außenseite 9 auf. Entsprechend wird das Spritzgussteil 1 hergestellt.

Wie Figur 1 entnommen werden kann, verschließt das als Verschluss 5 hergestellte Spritzgussteil 1 im Gebrauch ein Aufnahmevolumen 21 des Behälters 1 lösbar. Das heißt, dass der Verschluss 5 wiederholt am Behälter 20 angebracht werden kann, um das Aufnahmevolumen 21 zu verschließen. Das Aufnahmevolumen 21 dient dem Aufnehmen/Aufbewahren einer Ware (nicht gezeigt), beispielsweise von Lebensmittel oder Kosmetik. Der Verschluss 5 ist im gezeigten Ausführungsbeispiel im Gebrauch mit der Oberseite 8 vom Aufnahmevolumen 21 abgewandt. Zudem ist der Verschluss im gezeigten Ausführungsbeispiel mit der Unterseite 7 dem Aufnahmevolumen 21 zugewandt.

Wie Figur 6 entnommen werden kann, umhüllt das als Verpackung 6 hergestellte Spritzgussteil 1 den Gegenstand 30 im umhüllten Zustand zumindest teilweise, im gezeigten Ausführungsbeispiel gänzlich. Der Gegenstand 30 kann eine Ware, beispielsweise Lebensmittel oder Kosmetik, aufnehmen/aufbewahren oder eine solche Ware sein. Im gezeigten Ausführungsbeispiel ist die Verpackung 6 mit der Oberseite 8 vom Gegenstand 30 abgewandt. Zudem ist im gezeigten Ausführungsbeispiel die Unterseite 7 dem Gegenstand 30 zugewandt.

In den gezeigten Ausführungsbeispielen ist, wie lediglich Figur 3 entnommen werden kann, zumindest die Oberseite 8 mit zumindest einer solchen Spritzgussteilstrukturierung 4 versehen. Dabei kann die Oberseite 8, wie in Figur 3 gezeigt, gänzlich mit einer solchen Spritzgussteilstrukturierung 4 versehen sein, die Oberseite 8 also einem solchen Spritzgussteilabschnitt 3 entsprechen. In den gezeigten Ausführungsbeispielen ist rein beispielhaft davon ausgegangen, dass ausschließlich die Oberseite 8 mit einer solchen Spritzgussteilstrukturierung 4 versehen ist, das Spritzgussteil 1 also einen einzigen Spritzgussteilabschnitt 3 aufweist, welcher der Oberseite 8 entspricht. Somit ist die Spritzgussteilstrukturierung 4 des als Verschluss 5 hergestellten Spritzgussteils 1 im Gebrauch vom Aufnahmevolumen 21 und somit auch von der im Aufnahmevolumen 21 aufgenommenen Ware abgewandt. Ferner ist Spritzgussteilstrukturierung 4 des als Verpackung 6 hergestellten Spritzgussteils 1 vom umhüllten Gegenstand 30 und/oder von der im Gegenstand 30 aufgenommenen Ware abgewandt. Folglich werden Wechselwirkungen der Spritzgussteilstrukturierung 4 mit der Ware bzw. dem Gegenstand 30 verhindert oder zumindest reduziert. Aufgrund der somit verhinderten oder zumindest reduzierten Wechselwirkung und/oder des somit erreichten zumindest reduzierten Belags der Spritzgussteilstrukturierung 4 mit der Ware, kommt es zu einer verbesserten Kompostierung des Spritzgussteils 1.

Die Spritzgussteilstrukturierung 4 weist, wie in Figur 3 angedeutet, Vertiefungen 10 auf. Das heißt, dass der Spritzgussteilabschnitt 3 mit der Spritzgussteilstrukturierung 4 versehen wird, indem im Spritzgussteilabschnitt 3 Vertiefungen 10 eingebracht werden. Die Vertiefungen 10 sind in Figur 3 nicht maßstabsgetreue gezeigt. Dabei können die Vertiefungen 10, wie Figur 3 entnommen werden kann, über den gesamten zugehörigen Spritzgussteilabschnitt 3 und somit über die Oberseite 8 verteilt sein. Wie in Figur 3 ferner angedeutet, verlaufen die Vertiefungen 10 im gezeigten Ausführungsbeispiel rein beispielhaft nebeneinander und parallel. Denkbar sind auch Vertiefungen 10, welche gebogen eckig und dergleichen verlaufen (nicht gezeigt). Ebenfalls sind Vertiefungen 10 möglich, welche sich gegenseitig überschneiden/kreuzen (nicht gezeigt).

Figur 4 zeigt einen Schnitt durch das Spritzgussteil 1 im Bereich einer solchen Vertiefung 10. Wie Figur 10 entnommen werden kann, ist im gezeigten Ausführungsbeispiel rein beispielhaft von einem rechteckigen Querschnitt der Vertiefung 10 ausgegangen. Die Vertiefung 10 weist eine Tiefe 11 auf, welche entlang einer Normalen N des zugehörigen Spritzgussteilabschnitts 3, im gezeigten Ausführungsbeispiel parallel zur Normalen N des zugehörigen Spritzgussteilabschnitts 3, verläuft. Die Vertiefung 10 weist zudem eine des zugehörigen Spritzgussteilabschnitts 3, insbesondere quer zur Normalen N, verlaufende Länge 12 auf. Die Tiefe 11 beträgt in den gezeigten Ausführungsbeispielen zumindest 10 µm, insbesondere zwischen 10 µm und 100 µm, beispielsweise zwischen 50 µm und 80 µm. Die Länge 12 beträgt in den gezeigten Ausführungsbeispielen zwischen 70 mm und 100 mm. Zudem weist die Spritzgussteilstrukturierung 4 in den gezeigten Ausführungsbeispielen zwischen 0,010 und 0,50 Vertiefungen 10 pro Quadratmillimeter auf.

Figur 5 zeigt ein Spritzgusswerkzeug 13, welches zur Herstellung des Spritzgussteils 1 verwendet wird. Nachfolgend wird der Einfachheit halber lediglich auf das als Verschluss 5 hergestellte Spritzgussteil 1 eingegangen. Das als Verpackung 6 hergestellte Spritzgussteil 1 lässt sich in analoger Weise mit einem entsprechend angepassten Spritzgusswerkzeug 13 herstellen.

Wie Figur 5 entnommen werden kann, weist das Spritzgusswerkzeuge 13 eine Innenfläche 14 auf, mit welcher beim Spritzgießen die Außenfläche 2 des Spritzgussteils 1 zumindest bereichsweise hergestellt wird. Im gezeigten Ausführungsbeispiel wird die Außenfläche 2 des Spritzgussteils 1 gänzlich mit der Innenfläche 14 des Spritzgusswerkzeugs 13 hergestellt. In dem gezeigten Ausführungsbeispiel ist das Spritzgusswerkzeug 13 rein beispielhaft zweiteilig. Dabei ist zumindest ein Abschnitt 15 der Innenfläche 14 mit einer Strukturierung 15 versehen, welche nachfolgend auch als Werkzeugabschnitt 15 und Werkzeugstrukturierung 16 bezeichnet werden. Der jeweilige Werkzeugabschnitt 15 ist einem Spritzgussteilabschnitt 3 zugeordnet, derart, dass die jeweilige Werkzeugstrukturierung 16 beim Spritzgießen eine zugehörige solche Spritzgussteilstrukturierung 4 herstellt. In dem gezeigten Ausführungsbeispiel weist das Spritzgusswerkzeug 13 somit einen einzigen solchen Werkzeugabschnitt 15 mit einer Werkzeugstrukturierung 16 auf. Dabei ist rein beispielhaft davon ausgegangen, dass der Werkzeugabschnitt 15 mit einem die Werkzeugstrukturierung 16 aufweisenden Einsatz 17 versehen ist, sodass der Einsatz 17 die Werkzeugstrukturierung 16 bildet.

## Patentansprüche

1. Verfahren zur Herstellung eines kompostierbaren Spritzgussteils (1) aus einem zumindest Biopolymere aufweisenden, thermoplastischen Werkstoff mittels Spritzguss, wobei das Spritzgussteil (1) aus dem Werkstoff spritzgegossen und eine Außenfläche (2) des Spritzgussteils (1) zumindest in einem Spritzgussteilabschnitt (3) mit einer Spritzgussteilstrukturierung (4) versehen wird, derart, dass die Spritzgussteilstrukturierung (4) im zugehörigen Spritzgussteilabschnitt (3) eine Oberfläche des Spritzgussteils (1) vergrößert.

2. Verfahren nach Anspruch 1,
**dadurch gekennzeichnet,**
**dass** das Spritzgussteil (1) aus mit einem Biokunststoff compoundiertem Naturmaterial aufweisenden Werkstoff spritzgegossen wird, wobei das Naturmaterial Fasern natürlichen Ursprungs aufweist.

3. Verfahren nach Anspruch 2,
**dadurch gekennzeichnet,**
**dass** das Spritzgussteil (1) aus einem mit einem Biokunststoff compoundiertem Holzmaterial aufweisenden Werkstoff spritzgegossen wird.

4. Verfahren nach einem der Ansprüche 1 bis 3,
**dadurch gekennzeichnet,**
- **dass** ein Spritzgusswerkzeug (13) zum Spritzgießen des Spritzgussteils (1) bereitgestellt wird, sodass mit einer Innenfläche (14) des Spritzgusswerkzeugs (13) die Außenfläche (2) des Spritzgussteils (1) zumindest bereichsweise hergestellt wird,
- **dass** zumindest ein Werkzeugabschnitt (15) der Innenfläche (14) mit einer Werkzeugstrukturierung (16) versehen wird, wobei der jeweilige Werkzeugabschnitt (16) einem Spritzgussteilabschnitt (3) zugeordnet ist, derart, dass die jeweilige Werkzeugstrukturierung (16) beim Spritzgießen eine zugehörige solche Spritzgussteilstrukturierung (4) herstellt.

5. Verfahren nach einem der Ansprüche 1 bis 4,
**dadurch gekennzeichnet,**
- **dass** das Spritzgussteil (1) mit einer Außenfläche (2) hergestellt wird, welche eine Unterseite (7), eine von der Unterseite (7) abgewandte Oberseite (8) und zumindest eine die Unterseite (7) mit der Oberseite (8) verbindende Außenseite (9) aufweist,
- **dass** zumindest die Oberseite (8) mit zumindest einer solchen Spritzgussteilstrukturierung (4) versehen wird.

6. Verfahren nach einem der Ansprüche 1 bis 5,
**dadurch gekennzeichnet,**
**dass** als Spritzgussteil (1) ein Verpackungsteil (18) zum Verschließen eines Aufnahmevolumens (21) eines Behälters (20) oder Umhüllen eines Gegenstands (30) hergestellt wird.

7. Verfahren nach Anspruch 5 und 6,
**dadurch gekennzeichnet,**
**dass** als Oberseite (8) diejenige Seite hergestellt wird, welche im Gebrauch vom Aufnahmevolumen (21) oder vom Gegenstand (30) abgewandt ist.

8. Verfahren nach Anspruch 6 oder 7,
**dadurch gekennzeichnet,**
**dass** als Verpackungsteil (18) ein Verschluss (5) zum Verschließen eines Aufnahmevolumens (21) eines Behälters (20) hergestellt wird.

9. Verfahren nach Anspruch 6 oder 7,
**dadurch gekennzeichnet,**
**dass** als Verpackungsteil (18) eine Verpackung (6) zum Umhüllen eines Gegenstands (30) hergestellt wird.

10. Verfahren nach einem der Ansprüche 1 bis 9,
**dadurch gekennzeichnet,**
**dass** die Spritzgussteilstrukturierung (4) in zumindest einem der wenigstens einen Spritzgussteilabschnitte (3) mit Vertiefungen (10) herstellt wird, welche eine Tiefe (11) von zumindest 10 µm, insbesondere zwischen 10 µm und 100 µm, aufweisen.

11. Verfahren nach einem der Ansprüche 1 bis 10,
**dadurch gekennzeichnet,**
**dass** die Spritzgussteilstrukturierung (4) in zumindest einem der wenigstens einen Spritzgussteilabschnitte (3) mit Vertiefungen (10) herstellt wird, derart, dass der Spritzgussteilabschnitt (3) zwischen 0,010 und 0,50 Vertiefungen (10) pro Quadratmillimeter aufweist.

12. Verwendung eines Spritzgusswerkzeugs (13) zum Spritzgießen eines Spritzgussteils (1) nach einem der Ansprüche 4 bis 11, wobei das Spritzgusswerkzeug (13) in zumindest einem Werkzeugabschnitt (15) der Innenfläche (14) eine Werkzeugstrukturierung (16) aufweist, derart, dass die jeweilige Werkzeugstrukturierung (16) beim Spritzgießen eine zugehörige Spritzgussteilstrukturierung (4) des Spritzgussteils (1) herstellt.

13. Verpackungsteil (18), insbesondere Verschluss (5) zum Verschließen eines Behälters (20), hergestellt gemäß dem Verfahren nach einem der Ansprüche 6 bis 11.

14. Behälter (20) mit einem Aufnahmevolumen (21) zum Aufnahmen einer Ware, insbesondere von Kosmetik oder Lebensmittel, und einem Verschluss (5) nach Anspruch 13, wobei der Verschluss (5) das Aufnahmevolumen (21) lösbar verschließt.

15. Behälter nach Anspruch 14,
**dadurch gekennzeichnet,**
**dass** der Verschluss (5) mit der Oberseite (8) vom Aufnahmevolumen (21) abgewandt ist.
